# EUROPÄISCHE PATENTSCHRIFT

(11) **EP 1 152 728 B1**
(45) Veröffentlichungstag und Bekanntmachung des Hinweises auf die Patenterteilung: **18.06.2008**
(21) Anmeldenummer: 00900452.4
(22) Anmeldetag: 19.01.2000
(51) Int. Cl.: A61J 1/00, G01K 3/04

(54) **VERFAHREN UND EINRICHTUNG ZUR ÜBERWACHUNG DER QUALITÄT UND ZUR IDENTIFIKATION**
METHOD AND DEVICE FOR CONTROLLING QUALITY AND FOR IDENTIFICATION
PROCEDE ET DISPOSITIF DE CONTROLE DE QUALITE ET D'IDENTIFICATION

(30) Priorität: 19.01.1999 AT 7199
(43) Veröffentlichungstag der Anmeldung: 14.11.2001
(73) Patentinhaber: 3S Smart Sensor Systems Entwicklungsgesellschaft m. b. H, 2320 Schwechat (AT)
(72) Erfinder: LIESINGER, Wilhelm, A-9873 Döbriach (AT)
(74) Vertreter: Krause, Peter
(86) Internationale Anmeldenummer: PCT/AT2000/000012
(87) Internationale Veröffentlichungsnummer: WO 2000/042969

(56) Entgegenhaltungen:
- EP-A- 0 511 807
- WO-A-86/01595
- WO-A-92/03705
- AT-B- 403 245
- PHILIPS SEMICONDUCTORS-TAGSYS, TEXAS INSTRUMENTS INC.: 'Item-level visibility in the pharamaceutical supply chain: a comparison of hf and uhf rfid technologies' WHITE PAPER Juli 2004, Seiten 1 - 27, XP003019079

## Beschreibung

Die Erfindung bezieht sich auf ein Verfahren zur Überwachung der Qualität und zur Identifikation von in einem Behälter aufbewahrten bzw. gelagerten flüssigen Medium, wie es im Anspruch 1 bezeichnet ist. Die Erfindung bezieht sich aber auch auf eine Einrichtung zur Durchführung des Verfahrens, wie sie im Anspruch 2 bezeichnet ist.

Behälter dieser Art sind aus der DE 19 46 761 A1 bekannt. Dabei ist die Tasche auf einer Seite des Beutels aufgeschweißt und dient zur Aufnahme von Proberöhrchen und gegebenenfalls Unterbringung eines Entnahmegerätes und als Aufklebefläche für ein Etikett.

Derartige Behälter werden beispielsweise zur Gefrierlagerung von Blutspenden in Blutbanken verwendet. Dabei ist zu gewährleisten, daß die Kühlkette vor der Verwendung der Blutkonserve zu keinem Zeitpunkt unterbrochen ist. Darüber hinaus ergibt sich das Problem, daß eine ausführliche Beschriftung des Behälters auf nachträglich, d.h. nach der Herstellung des Behälters, aufgebrachten Klebeetiketten auf Grund der ungenügenden Kältefestigkeit herkömmlicher Klebeetiketten nicht möglich ist. Die Beschriftung erfolgt daher nur mit einer Referenznummer. Gesonderte Karteien sind zur Verwaltung der Daten der Blutkonserven notwendig.

Weiters ist aus der AT 403 245 B ein Behälter zur Aufbewahrung von Blut, Blutplasma, Injektionslösungen o.dgl. bekannt, der an einer Seite eine Tasche aufweist, die mit dem Behälterinneren in Berührung steht. In dieser Tasche ist ein Schaltungsträger enthalten, der eine Stromversorgung, einen Temperatursensor, eine Verarbeitungslogik, einen nicht-flüchtigen Datenspeicher sowie eine Kommunikationsschnittstelle aufweist.

Nachteilig bei diesem Behälter ist vor allem die direkt an ihm angeordnete Stromversorgung sowie die aufwendige Verarbeitungslogik für die Meßmethode.

Durch die direkte Anordnung der Stromversorgung versetzt die Verarbeitungslogik die elektrische Schaltung bei einem bestimmten Temperaturwert in einen Ruhemodus, der erst wieder aufgehoben wird, wenn die Temperatur einen bestimmten Schwellwert übersteigt. Es ist leicht einzusehen, daß eine derartige Meßmethode: aufwachen-messen-einschlafen, in Zusammenarbeit mit einem Akkumulator oder einer Batterie viele Fehlerquellen in sich birgt. So ist es nicht erkennbar, wenn beispielsweise die Batterie nicht funktionstüchtig ist. Auch der rasterförmige Aufbau von eigenständigen Elementen, wie Speicher, Oscilator, Spannungsversorgung bzw. Kommunikationsschnittstelle, trägt nicht zur Gewährleistung der Funktionstüchtigkeit bei.

Ferner ist es bei der Infrarot-Kommunikation nachteilig, daß einerseits ein wesentlich größerer Aufwand anfällt und anderseits ein hoher Stromverbrauch gegeben ist.

Ferner ist aus der EP-A-0 511 807 ein Verfahren bekannt, das zur Temperaturüberwachung von Lebensmittel während der Lagerung oder des Transportes eingesetzt werden kann. Die in eine Kunststoffhülle eingeschweißten elektronischen Komponenten einer Temperaturmeßvorrichtung werden von einer Batterie versorgt, wobei die Meßdaten induktiv ausgelesen werden können. Eine derartige stationäre Batterie bringt jedoch schwerwiegende Probleme im betriebsmäßigen Einsatz mit sich. Ferner ist noch der Nachteil gegeben, daß bei einer induktiven Aufladung der Batterie eine Berührung der korrespondierenden Komponenten gegeben sein muß.

Als alternative Ausführungsform wird auch in dieser Druckschrift eine Sensorkarte mit batterieloser, induktiver Energieversorgung für die Messung, Verarbeitung, Speicherung und Datenübertragung beschrieben.

Der vorliegenden Erfindung liegt die Aufgabe zugrunde, ein Verfahren der eingangs zitierten Art zu schaffen, das einerseits die oben beschriebenen Nachteile vermeidet und das anderseits über den gesamten Zeitraum der Lagerung des flüssigen Mediums eine nachvollziehbare Qualitätskontrolle gewährleistet.

Diese Aufgabe der Erfindung wird durch die Merkmale des Anspruches 1 gelöst.

Der sich durch die Merkmale des Kennzeichenteiles des Anspruches 1 ergebende überraschende Vorteil ist vor allem darin zu sehen, daß der aktuelle Zustand des Mediums jederzeit bestimmbar ist. Die Meßmethode beruht im Wesentlichen auf der Bestimmung des Temperaturunterschiedes zwischen der Umgebungstemperatur und der Temperatur des Mediums. Aus den Messungen der beiden Temperaturen wird die Differenz errechnet und dieser Wert wird gespeichert. Um beide Kurvenverläufe nachträglich darstellen zu können, wird in jedem Fall auch der mittlere, reelle Temperaturverlauf abgespeichert.

Vorteilhaft ist natürlich auch, daß die elektrische Energieversorgung für die Messung, die Errechnung und die Speicherung induktiv durchgeführt wird und zwar nach frei wählbaren Zeitintervallen.

Wie ja an sich bekannt, wird zur Gewährleistung einer zeitlich begrenzten Haltbarkeit, beispielsweise Blut, je nach Anwendungsfall, bei Temperaturen von vorzugsweise +2°C bis +8°C gelagert. Zur Qualitätskontrolle sind kontinuierliche Messungen über den gesamten Zeitraum notwendig. Diese Messungen beginnen zum Zeitpunkt der Datenerfassung, wobei Personen- und Blutdaten erfaßt werden, und enden mit der Entnahme des Behälters aus der Lagerstätte. Die zu messenden Größen sind Temperatur und Zeit. Die Anzahl der Messungen ist frei definierbar, wobei die Qualität der Überwachung mit steigender Meßrate erhöht wird.

Sämtliche errechneten Werte sowie Personen- und Blutdaten werden gespeichert und in weiterer Folge in eine Datenbank, beispielsweise einen externen Rechner bzw. ein PC-System eingelesen, in dem deren Auswertung, gegebenenfalls in Form von Diagrammen, durchgeführt wird. Die Stammdaten werden in entsprechenden Eingabefeldern aufgezeigt. Bei der Auswertung der Temperaturdifferenz kann diese mit zwei Punkten auf einer Diagrammvertikalen unter Bezugnahme auf den mittleren reellen Temperaturverlauf aufgezeichnet werden.

Die Kommunikation zwischen dem Speicher und der Datenbank erfolgt induktiv, so daß keine direkte Kontaktierung notwendig ist.

Dieses erfindungsgemäße Verfahren ermöglicht eine hochwertige Qualitätskontrolle, wobei nach der Auswertung jedes Stadium einen charakteristischen und nur für diesen speziellen Zustand typischen Kurvenverlauf zeigt, beispielsweise bei der Befüllung, bei der Einlagerung und bei der Lagerung selbst.

Ein überraschenden Vorteil einer Einrichtung zur Durchführung des Verfahrens liegt darin, daß eine Implementierung der Einrichtung einfach und rationell durchzuführen ist, wobei auch die Funktionsfähigkeit mindestens über die Lagerzeit gewährleistet ist.

Die Kontrolleinheit bzw. der Chip ist zur Gänze beispielsweise in einer Synthetiklasche oder -tasche eingeschweißt und wird als zusätzliche Komponente am Behälter, beispielsweise am Blutbeutel, angebracht. Der Chip bzw. dessen integrierte Schaltung umfaßt die zentrale Prozessoreinheit, mindestens einen Speicher, die Kommunikationsschnittstelle und die für die induktive Energieversorgung notwendigen Bauteile.

Vorteilhaft ist es auch, daß die Sensoren zur Messung der Temperaturen derart angeordnet sind, daß der Temperaturunterschied deutlich und genau bestimmt bzw. errechnet werden kann. Dazu ist jeweils eine Isolationsschicht zwischen dem Chip und dem Sensor angeordnet. So fließt auch beispielsweise die Wärmeabgabe der Kontrolleinheit, auf Grund des Eigenstromverbrauches, nicht in die Messung bzw. in die Rechnung ein. Damit ist der aktuelle Zustand des Mediums jederzeit bestimmbar.

Von Vorteil ist auch, daß sowohl die elektrische Energieversorgung als auch die Kommunikation induktiv, insbesondere über eine integrierte Antenne erfolgt. Eine Beeinflussung des Mediums ist also zu keiner Zeit gegeben. Die induktiv übertragenen gesammelten errechneten Werte sowie die Stammdaten sind einer externen Datenbank zuführbar.

Die Erfindung wird im nachfolgenden anhand der in den Zeichnungen dargestellten Ausführungsbeispiele näher erläutert.

Es zeigen:
Fig. 1 eine Draufsicht auf einen flexiblen Behälter
Fig. 2 einen Schnitt durch die Tasche;
Fig. 3 ein Blockschaltbild für den Chip;
Fig. 4 den Temperaturverlauf während der Befüllung des Behälters in einem Diagramm;
Fig. 5 den Temperaturverlauf während der Einlagerung im Diagramm;
Fig. 6 den Temperaturverlauf während der Lagerung eines Blutbeutels im Diagramm.

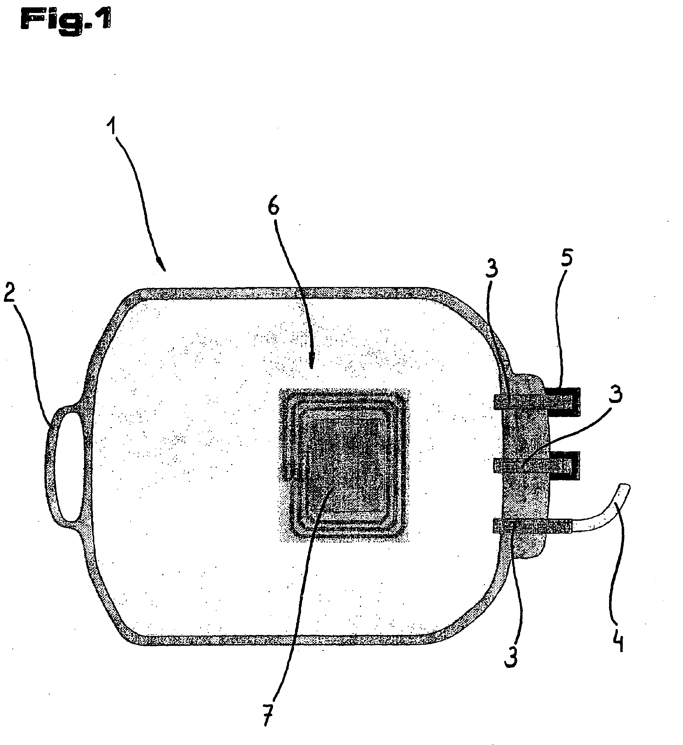

Der in Fig. 1 dargestellte Behälter zur Aufbewahrung von einem flüssigen Medium, wie beispielsweise Blut, Blutplasma, Injektionslösungen, Nährlösungen o. dgl. ist durch einen flexiblen Beutel 1 aus Kunststoff gefertigt, wobei natürlich jeder geeignete Kunststoff Verwendung finden kann, der das eingefüllte Medium nicht beeinflußt. Der Beutel 1 weist an seiner Oberseite eine Lasche 2 zur Befestigung, beispielsweise an einem Infusionsständer sowie an seiner Unterseite Anschlüsse 3 für ein nur teilweise dargestelltes Blutabnahme- oder -infusionsbesteck 4 auf, das bei dem dargestellten Beispiel am linken Anschluß 3 angeschlossen ist. Die restlichen Anschlüsse 3 sind bei den gezeigten Beispiel durch Abreißlaschen 5 steril verschlossen.

Auf der Außenseite des Beutels 1 ist eine Tasche 6 angeordnet, welche durch ein Blatt aus einer Kunststoffolie gebildet ist, welches mit der Außenseite des Beutels 1 über seinen Umfang hochfrequenzverschweißt ist. In die Tasche 6 eingesetzt und damit vorzugsweise allseitig eingeschweißt ist eine integrierte Schaltung, insbesondere ein Chip 7. Natürlich kann die Tasche 6 zunächst auf drei Seiten verschweißt werden und nach dem Einsetzen des Chip 7 wird die vierte Seite verschweißt. Der Chip 7 kann auch in einem zusätzlichen - nicht dargestellten - Kunststoffmantel zum weiteren Schutz eingehüllt, beispielsweise eingeschweißt oder eingegossen, werden. Ebenso ist es möglich den Chip 7 zur Gänze in eine Synthetiklasche einzuschweißen und als zusätzliche Komponente am Beutel 1 anzubringen.

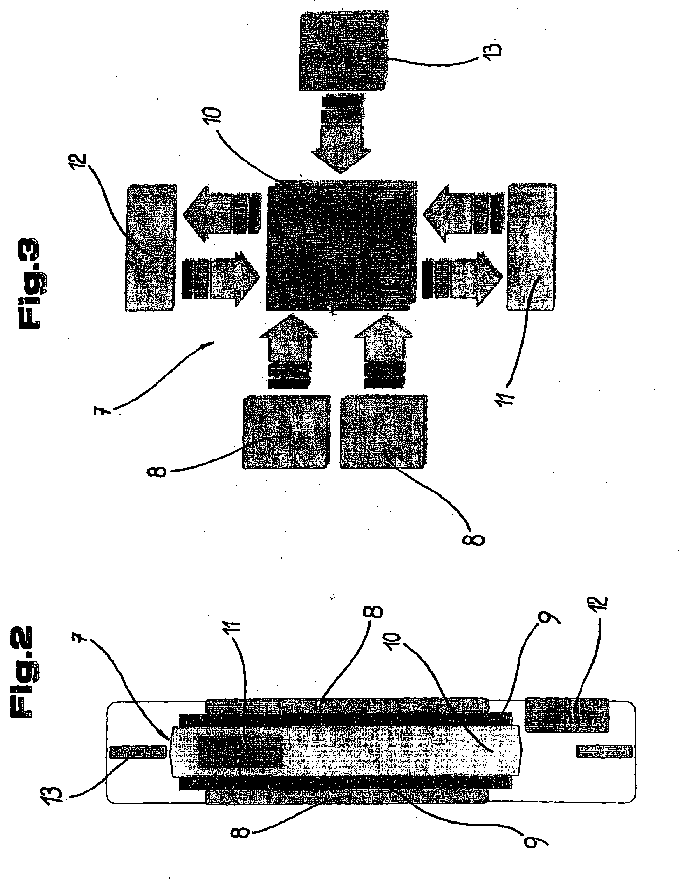

Gemäß der Fig. 2 ist der Aufbau einer Kontrolleinheit in einer Tasche 6 aufgezeigt. Beidseits des Chip 7 also einmal zur Seite des Beutelinhaltes, behälterseitig bezeichnet und einmal zur Seite der Beutelumgebung, außenseitig bezeichnet, sind die Sensoren 8 zur Messung der jeweiligen Temperatur angeordnet. Um nun diese zeitweise unterschiedlichen Temperaturen deutlich bzw. eindeutig messen zu können, ist zwischen dem Chip 7 und dem Sensor 8 eine Isolationsschicht 9 vorgesehen.

Der Chip 7 weist eine Prozessoreinheit 10, einen Speicher 11 sowie eine Kommunikationsschnittstelle 12 auf. Zur induktiven Versorgung der Einheiten mit elektrischer Energie ist eine integrierte Antenne 13 vorgesehen. Über diese Antenne 13 erfolgt auch die Kommunikation nach außen.

Diese Kontrolleinheit, insbesondere der Chip 7, arbeitet vorzugsweise in einem Temperaturbereich von +50°C bis -12°C äußerst zuverlässig. Es sind aber auch Ausführungen denkbar, die in einem Temperaturbereich von -20°C bis +120°C oder einen noch größeren Temperaturbereich arbeitsfähig sind. Darüber hinaus entspricht die Kontrolleinheit bzw. der Chip 7 allen gesetzlichen Vorschriften und Normen. In diesen Normvorschriften werden unter anderem auch die Störungsresistenz gegenüber Außeneinflüssen und die Abstrahlung von Störfeldern geregelt.

Der Aufbau der Kontrolleinheit, insbesondere des Chip 7 in einem Blockschaltbild, ist in Fig. 3 dargestellt. Der Kern der integrierten Schaltung, also des Chip 7, ist die Prozessoreinheit 10, in der die Berechnung der Differenz der Temperatur des Mediums und der Umgebungstemperatur durchgeführt wird. Dieser Wert der Temperaturdifferenz wird in einem Speicher 11, insbesondere in einem EE-Prom oder einem Zwischenspeicher, einem sogenannten Flash-Speicher, abgelegt. Ein derartiger Speicher 11 bietet Platz für eine Datenmenge von ca. einer DIN-A4 Seite. Wichtig ist, daß es ein Speicher 11 ist, der auch ohne Spannungsversorgung die Daten sicher behält. Natürlich ist auch dieser Speicher 11 auf dem Chip 7 integriert und mit der Prozessoreinheit 10 verbunden. Die Prozessoreinheit 10 ist im Zuge der integrierten Schaltung auch mit der induktiven Kommunikationsschnittstelle 12 verbunden. Wie bereits erwähnt, wird die Kommunikation mit einer externen Datenbank, beispielsweise mit einem externen Rechner bzw. mit einem PC-System, induktiv, d.h. berührungslos, durchgeführt.

Die elektrische Energieversorgung erfolgt ebenfalls induktiv und zwar vorzugsweise auch über die integrierte Antenne 13. Die Arbeitsspannung für den Chip 7 beträgt vorzugsweise 3,3V. Sie könnte aber durchaus kleiner gewählt werden. Natürlich ist dann ein Sender vorzusehen, der von außen mit entsprechender Frequenz die Spannungsversorgung garantiert. Da die Zeitintervalle für die Zuführung der Energieversorgung frei wählbar sind, sind auch die Meßintervalle entsprechend wählbar. Die Intervalle dieser Spannungszuführung sind also gleich der Meßfrequenz. Die Messungen der Temperaturen starten daher immer mit der Zuführung der Energieversorgung.

Die Prozessoreinheit 10 ist natürlich auch mit den beiden Sensoren 8 zur Messung der Temperaturen verbunden.

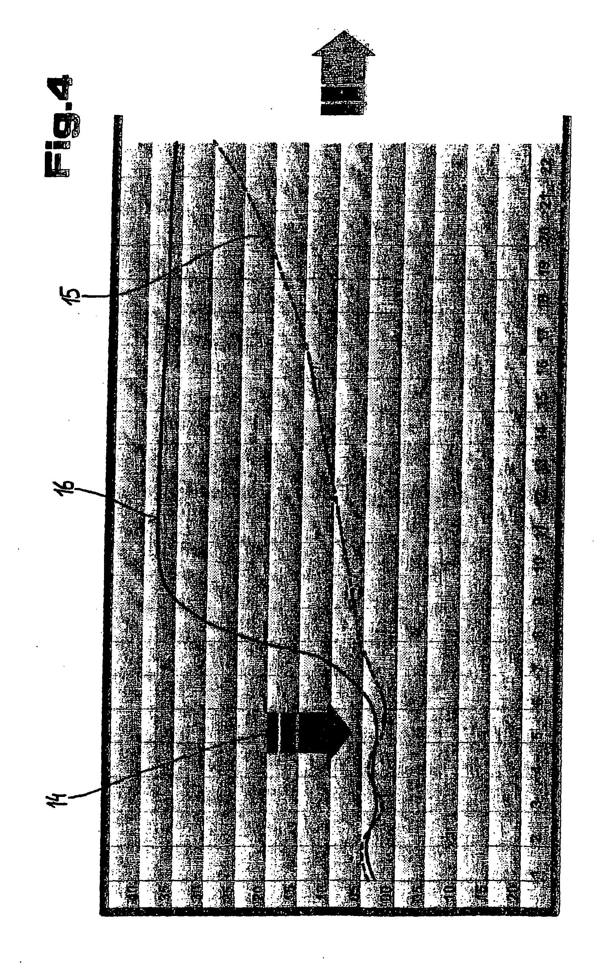

Gemäß der Fig. 4 wird der Temperaturverlauf bei der Befüllung aufgezeigt. Der Pfeil 14 makiert den zeitlichen Beginn, wobei die gestrichelte Linie das Meßresultat 15 des außenseitigen Sensors 8 und die nicht gestrichelte Linie das Meßresultat 16 des behälterseitigen Sensors 8 beschreibt. Die beiden Meßresultate 15, 16 zeigen den deutlich erkennbaren Unterschied zwischen der Temperatur des Mediums und der Umgebungtemperatur. Der behälterseitige Sensor 8 mißt die Erwärmung an der Innenseite, beispielsweise eines Blutbeutels, wodurch auch durch die Temperatur des Blutes der schnelle Anstieg des Meßwertes erklärbar ist. Der leichte Anstieg der Umgebungstemperatur ist dadurch zu erklären, daß die Masse des zu überprüfenden Mediums im Falle von Temperaturschwankungen, entweder der Umgebungstemperatur oder der Temperatur des Mediums, einen deutlich meßbaren Temperaturunterschied bedingt. Um diesen Unterschied zu verdeutlichen sind Isolierungen von Vorteil. Weiters dienen diese Schichten zur Isolation zwischen Kontrolleinheit und dem jeweiligen Sensor 8, da die Erwärmung der Kontrolleinheit auf Grund ihrer Leistungsaufnahme zu fehlerhaften Temperaturmessungen führen könnte.

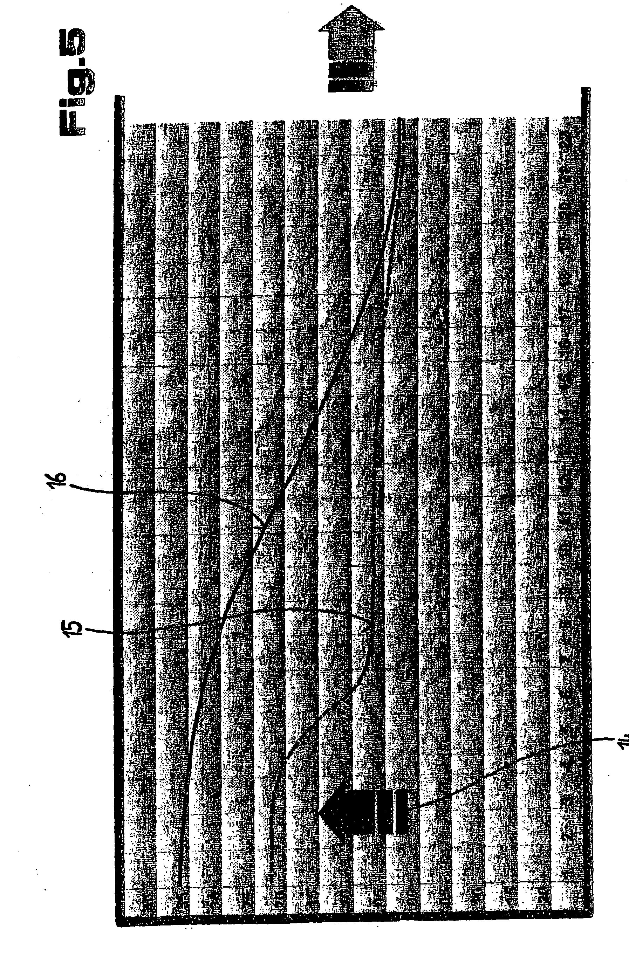

Entsprechend der Fig. 5 ist der Temperaturverlauf während der Einlagerung eines Blutbeutels in einem Kühlgerät aufgezeigt. Der außenseitige Sensor 8 mißt wieder die Umgebungstemperatur im Kühlgerät und der behälterseitige Sensor 8 folgt dem Temperaturverlauf des sich abkühlenden Blutes. Daraus ergibt sich der schnellere Abfall des Meßresultates 15 am außenseitigen Sensor 8 gegenüber dem Meßresultat 16 des behälterseitigen Sensors 8. Der Pfeil 14 markiert wieder den zeitlichen Beginn der Einlagerung.

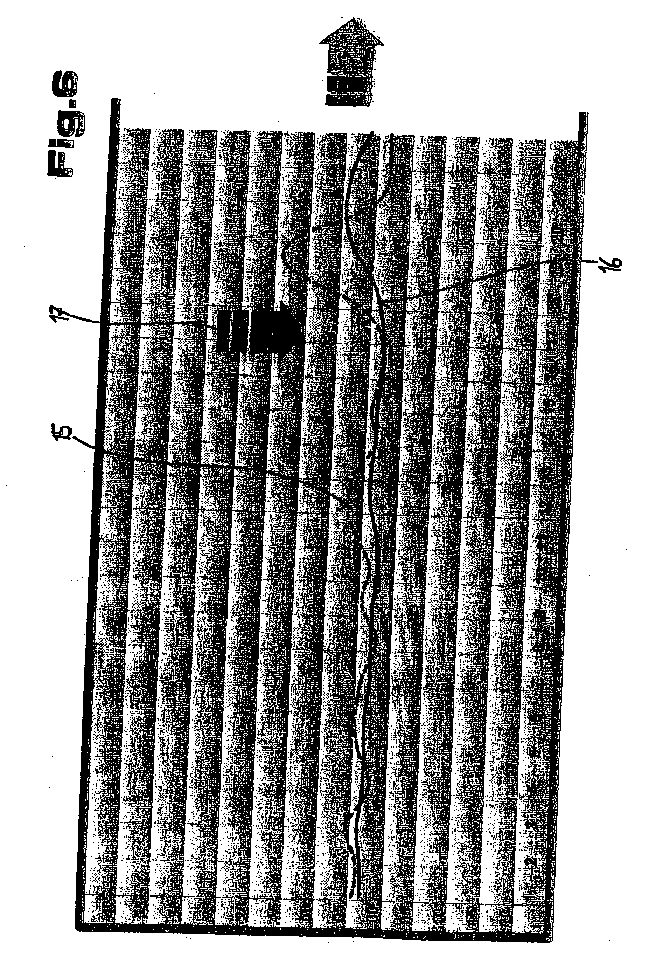

Gemäß der Fig. 6 ist der Temperaturverlauf während der Lagerung eines Blutbeutels dargestellt. Die gestrichelte Linie zeigt wieder das Meßresultat 15 des außenseitigen Sensors 8 und die nicht gestrichelte Linie das Meßresultat 16 des behälterseitigen Sensors 8. Die annähernd parallel verlaufenden Kurven zeigen minimale Temperaturunterschiede. Das Meßresultat 15 zeigt im Verlauf Schwankungen, die wegen unterschiedlicher Ursachen wegen entstehen können. So können beispielsweise Temperaturanstiege durch das Öffnen des Kühlgerätes gegeben sein. Der Pfeil 17 zeigt auf den Beginn eines extremen Temperaturunterschiedes, ausgelöst durch beispielsweise einem Ausfall des Kühlaggregates. Ab diesem Zeitpunkt ist bereits eine sichtbare Temperaturveränderung des Blutes erkennbar.

## Patentansprüche

1. Verfahren zur Überwachung der Qualität und zur Identifikation von in einem Behälter aufbewahrten bzw. gelagerten flüssigen Medium, wobei die Umgebungstemperatur und die Temperatur des Mediums kontinuierlich gemessen und gespeichert werden und Stammdaten gespeichert werden, wobei zur Auswertung Werte über eine Kommunikationsschnittstelle auf einen externen Rechner übertragen werden und die Stammdaten in entsprechenden Eingabefeldern aufgezeigt werden, **dadurch gekennzeichnet, dass** aus der Umgebungstemperatur und der Temperatur des Mediums die Differenz errechnet wird und dieser Wert der Temperaturdifferenz und auch der mittlere Temperaturverlauf gespeichert werden, dass die elektrische Energieversorgung für die Messung, die Errechnung und die Speicherung induktiv, entsprechend frei wählbaren Zeitintervallen, durchgeführt wird und dass die Werte der Temperaturdifferenz und die Stammdaten über eine induktive Kommunikationsschnittstelle (12) auf den externen Rechner übertragen werden.

## Claims

1. Method for monitoring the quality and for identification of liquid medium contained or stored in a container, whereby the ambient temperature and the temperature of the medium are measured and stored continuously and master data is stored, whereby values are transferred to an external computer for evaluation via a communications interface, and the master data is displayed in respective entry fields, **characterised by** the fact that the difference is calculated from the ambient temperature and the temperature of the medium, and this value of the temperature difference and also the average temperature curve are stored, that the electrical power supply for the measurement, the computation and the storage are performed inductively, according to freely selectable time intervals, and that the value of the temperature difference and the master data are transferred onto the external computer via an inductive communications interface (12).

## Revendications

1. Procédé de surveillance de la qualité et d'identification d'un fluide liquide stocké dans un récipient avec mesurage et sauvegarde continus de la température ambiante et de la température du fluide, et avec sauvegarde des données de base; lors de l'évaluation, les valeurs sont transmises à un ordinateur extérieur et les données de base sont indiquées dans des champs de saisie; ce procédé est **caractérisé par le fait que** la différence entre la température ambiante et la température du fluide est calculée, et que cette valeur de la différence de la température et le gradient moyen de température sont sauvegardées, que l'alimentation en courant électrique requise pour le mesurage, le calcul et la sauvegarde est effectués par voie inductive conforme à des intervalles de temps choisies librement, ainsi que **par le fait que** ces valeurs des différences de température et des données de base sont transmises par une interface de communication inductive (12) à l'ordinateur extérieur.
